# EUROPÄISCHE PATENTSCHRIFT

(11) **EP 1 636 319 B1**
(45) Veröffentlichungstag und Bekanntmachung des Hinweises auf die Patenterteilung: **25.04.2007**
(21) Anmeldenummer: 04734214.2
(22) Anmeldetag: 21.05.2004
(51) Int. Cl.: C09D 11/00, A01N 31/08

(54) **STABILISIERTE WASSERHALTIGE FARBMITTELPRÄPARATIONEN**
STABILIZED AQUEOUS COLORANT PREPARATIONS
PREPARATIONS AQUEUSES DE COLORANTS STABILISEES

(30) Priorität: 11.06.2003 DE 10326210
(43) Veröffentlichungstag der Anmeldung: 22.03.2006
(73) Patentinhaber: Clariant Produkte (Deutschland) GmbH, 65929 Frankfurt am Main (DE)
(72) Erfinder: SAITMACHER, Klaus, 65830 Kriftel (DE); GEISENBERGER, Josef, 65843 Sulzbach (DE); SCHWEIKART, Karl-Heinz, 65760 Eschborn (DE); BORCHERT, Till, 63225 Langen (DE)
(86) Internationale Anmeldenummer: PCT/EP2004/005458
(87) Internationale Veröffentlichungsnummer: WO 2004/108841

(56) Entgegenhaltungen:
- EP-A- 1 122 286
- WO-A-01/62859
- US-A1- 2002 164 266
- DATABASE WPI Section Ch, Week 200062 Derwent Publications Ltd., London, GB; Class D22, AN 2000-641442 XP002298014 & JP 2000 226545 A (KONICA CORP) 15. August 2000 (2000-08-15)

## Beschreibung

Die Erfindung betrifft das Gebiet der Farbmittel, insbesondere zur Verwendung in Aufzeichnungsflüssigkeiten für Schreib- und Aufzeichnungsgeräte, z.B. für Tintenstrahldruck-Verfahren (Ink-Jet-Verfahren).

Beim Tintenstrahl- oder Ink-Jet-Verfahren handelt es sich um ein berührungsloses Druckverfahren, bei dem Tröpfchen der Aufzeichnungsflüssigkeit aus einer oder mehreren Düsen auf das zu bedruckende Substrat gelenkt werden.
Um Drucke hoher Schärfe und guter Auflösung zu erhalten, müssen die Aufzeichnungsflüssigkeiten und die darin enthaltenen Farbmittel hohen Anforderungen genügen, insbesondere im Hinblick auf Reinheit, Partikelfreiheit, Löslichkeit, Lagerstabilität, Viskosität, Oberflächenspannung sowie Leitfähigkeit.

Die wichtigste Rolle kommt dabei den in den Tinten eingesetzten Farbstoffen zu. Obwohl eine große Anzahl an Farbstoffen entwickelt wurde, gibt es nur wenige, die die an sie gestellten Anforderungen eines modernen Ink-Jet-Druckprozesses erfüllen. Eine wichtige Rolle spielen dabei Schwermetallkomplex-Farbmittel, insbesondere Kupferkomplex-Farbstoffe und -Pigmente. Neben farbstoffbasierenden Tinten werden in jüngster Zeit auch verstärkt pigmentierte Tinten im Ink-Jet-Druck eingesetzt.

Es ist bekannt, wasserhaltige Farbmittelpräparationen und Tinten, beispielsweise Ink-Jet-Tinten, mit biociden Wirkstoffen zu versetzen, um einen Befall durch unerwünschte Mikroorganismen wie Bakterien und Schimmelpilze, Hefen und Schleimorganismen zu verhindern.
Aus der DE-A-101 12 367 ist bekannt, eine synergistische Mischung aus Methyl-2H-isothiazol-3-on und 2-Brom-nitropropandiol zur Bekämpfung von Mikroorganismen in technischen Materialien einzusetzen.
In der JP 2000 226545-A werden eine Reihe weiterer Biocide zum Einsatz in Ink-Jet-Tinten vorgeschlagen.

Es zeigte sich jedoch, dass bei Farbmitteln, die komplexgebundene Schwermetallionen enthalten, oder bei Farbmitteln, die an sich schwermetallfrei sind, aber durch Schwermetallionen verunreinigt sind, Ausfällungen durch Reaktion des Schwermetallions mit üblichen Biociden oder üblichen Biocidmischungen entstehen können, wodurch insbesondere beim Ink-Jet-Druck die Düsen in den Druckköpfen verstopfen können (in der englischsprachigen Literatur als "nozzle clogging" bezeichnet). Solche Schwermetallionen, insbesondere mehrfach geladene Metallkationen wie beispielsweise Cu²⁺, Fe³⁺ oder Al³⁺ können in der Farbstofflösung, im Pigmentpulver oder Pigmentpresskuchen als Restverunreinigung vorhanden sein und über den Dispergierprozess in die entsprechende Tinte eingebracht werden. Schwermetallverunreinigungen können zudem in verwendeten Dispergiermitteln oder weiteren Tintenadditiven vorhanden sein. Da oben genannte Biocid-Schwermetallkomplexe oft auch deutliche Eigenfärbungen aufweisen, kann dies negative Auswirkungen auf die Coloristik der entsprechenden Tinten und damit hergestellter Ink-Jet-Ausdrucke haben. Neben dem Verstopfen der Druckerdüsen können unlösliche Komplexe zu Ablagerungen auf den Heizelementen des Druckers (in der englischsprachigen Literatur als "cogation" bezeichnet) oder zu Problemen bei Filtrationsprozessen führen.

Es bestand somit die Aufgabe, eine wirksame biocide Zusammensetzung für wässrige schwermetallhaltige Farbmittelpräparationen und Tinten bereitzustellen, die keinerlei Ausfällungen hervorruft. Weiterhin soll die biocide Zusammensetzung die in Rede stehenden Farbmittelpräparationen und Tinten in einem breiten pH-Bereich, insbesondere zwischen pH 3 und 10, vor Keimbefall schützen, da solche Farbmittelpräparationen oftmals aus Stabilitätsgründen in saurem oder in alkalischem Milieu in den Handel gebracht werden.

Es wurde gefunden, dass eine Mischung aus 5-Chloro-2-methyl-4-isothiazolin-3-on (CMIT genannt), 2-Methyl-4-isothiazolin-3-on (MIT genannt) und 2-Bromo-2-nitropropan-1,3-diol (Bronopol genannt) überraschenderweise diese Aufgaben löst.

Gegenstand der vorliegenden Erfindung ist daher die Verwendung einer antimikrobiell wirksamen Menge einer Mischung aus 5-Chloro-2-methyl-4-isothiazolin-3-on, 2-Methyl-4-isothiazolin-3-on und 2-Bromo-2-nitropropan-1,3-diol als Biocid in wasserhaltigen Farbmittelpräparationen gemäß Anspruch 1, vorzugsweise wasserhaltigen Aufzeichnungsflüssigkeiten, insbesondere Ink-Jet-Tinten, die eine Schwermetallionenkonzentration von größer oder gleich 20 ppm, insbesondere größer oder gleich 50 ppm, aufweisen.
Die Obergrenze der Schwermetallionenkonzentration sollte naturgemäß nicht über der Maximalkonzentration der biociden Mischung liegen. Wirksam verhindert werden Schwermetallausfällungen noch bei Metallkonzentrationen von etwa 500 pm, ohne dass die Menge der biociden Mischung über das ökonomisch vertretbare Maß hinaus gesteigert werden muss.
Die antimikrobielle Mischung kann selbstverständlich auch in wasserhaltigen Farbmittelpräparationen eingesetzt werden, in denen das Problem der Schwermetallausfällung nicht oder in nur geringem Maße besteht, z.B. bei Schwermetallionenkonzentrationen unter 20 ppm.

Als antimikrobiell wirksame Menge der besagten Mischung hat sich ein Gehalt von 0,001 bis 0,1 Gew.-%, bevorzugt 0,01 bis 0,05 Gew.-%, gerechnet als Feststoff und bezogen auf das Gesamtgewicht der wasserhaltigen Farbmittelpräparation, als zweckmäßig erwiesen.
Das Mengenverhältnis der Einzelbestandteile CMIT : MIT : Bronopol beträgt vorzugsweise (0,005 bis 0,1) : (0,005 bis 0,05) : 1, insbesondere (0,03 bis 0,065) : (0,01 bis 0,025) : 1.
Um die Dosierung zu vereinfachen, wird die antimikrobielle Mischung meist in Form einer verdünnten, z.B. 5 bis 15 gew.-%igen, wässrigen Lösung, die noch geringe Mengen anorganischer Salze, wie z.B. Mg-Nitrat und/oder Mg-Chlorid, enthalten kann, eingesetzt. Die in die Farbmittelpräparation eingesetzte Menge dieser Lösung beträgt dann vorzugsweise 0,01 bis 1 Gew.-%, insbesondere 0,1 bis 0,2 Gew.-%, bezogen auf das Gesamtgewicht der Farbmittelpräparation.

Von Interesse im Sinne der vorliegenden Erfindung sind Farbmittel, die komplexgebundene Schwermetalle enthalten.

Als Schwermetallkomplex-Farbmittel kommen Reaktivfarbstoffe, Direktfarbstoffe, Säurefarbstoffe, Dispersionsfarbstoffe und Pigmente in Betracht, die ein Schwermetall aus der Gruppe Cu, Co, Ni, Fe, Cr und Al komplex gebunden enthalten. Besonders bevorzugt sind Cu-Komplex-Farbstoffe und -Pigmente.

Beispiele solcher Reaktivfarbstoffe sind C.I. Reactive Black 8, C.I. Reactive Black 31; C.I. Reactive Blue 7, C.I. Reactive Blue 14, C.I. Reactive Blue 21, C.I. Reactive Blue 28, C.I. Reactive Blue 38, C.I. Reactive Blue 82, C.I. Reactive Blue 89, C.I. Reactive Blue 158, C.I. Reactive Blue 182, C.I. Reactive Blue 190, C.I. Reactive Blue 203, C.I. Reactive Blue 216, C.I. Reactive Blue 220, C.I. Reactive Blue 244; C.I. Reactive Violet 1, C.I. Reactive Violet 5; C.I. Reactive Red 6, C.I. Reactive Red 23 und C.I. Reactive Brown 18.
Beispiele für Direktfarbstoffe sind C.I. Direct Blue 76, C.I. Direct Blue 84, C.I. Direct Blue 86, C.I. Direct Blue 87, C.I. Direct Blue 98, C.I. Direct Blue 199, C.I. Direct Blue 202, C.I. Direct Blue 290; C.I. Direct Black 112; C.I. Direct Brown 95 und C.I. Direct Violet 47.
Beispiele für Säurefarbstoffe sind C.I. Acid Blue 87, C.I. Acid Blue 185 und C.I. Acid Blue 249.
Beispiele für Schwermetallkomplex-Pigmente sind C.I. Pigment Blue 15:1-15:4, C.I. Pigment Blue 17, C.I. Pigment Green 7, C.I. Pigment Green 37, C.I. Pigment Red 257, C.I. Pigment Red 271, C.I. Pigment Orange 65, C.I. Pigment Orange 68, C.I. Pigment Yellow 117, C.I. Pigment Yellow 129 und C.I. Pigment Yellow 153.

Besonders bevorzugt im Sinne der vorliegenden Erfindung sind C.I. Direct Blue 199 (5a) (Cu-Komplex), C.I. Reactive Black 31 (5b) (Cu-Komplex), C.I. Reactive Black 8 (Cu/Co-Komplex) und C.I. Reactive Red 23 (Cu-Komplex).

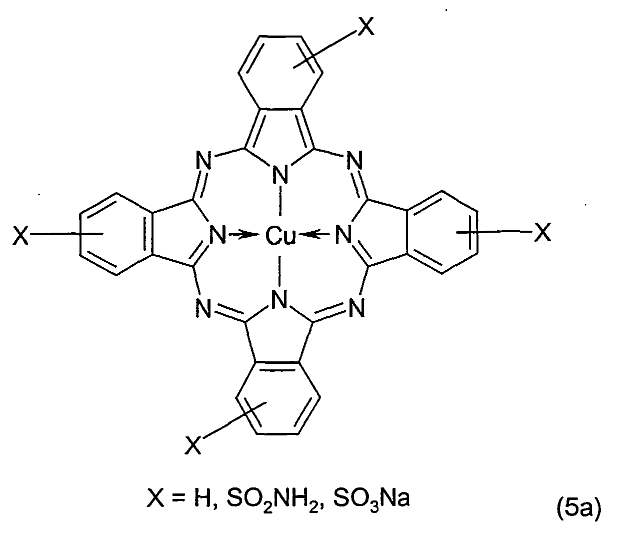

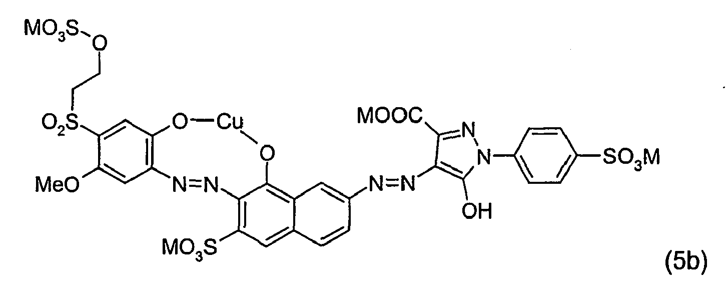

Weitere Beispiele für Cu-Komplexfarbstoffe sind Verbindungen der nachstehenden Formeln (5c) bis (5l).

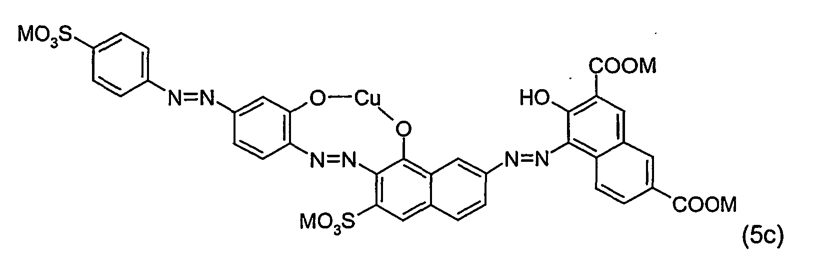

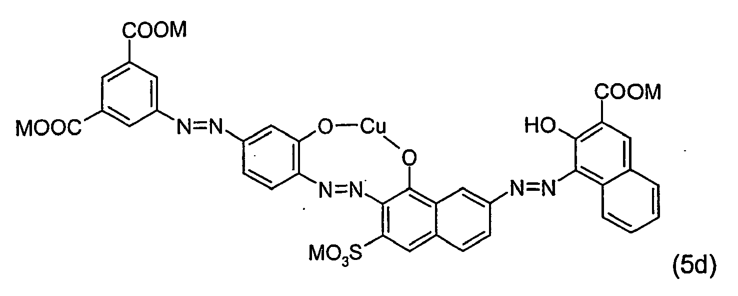

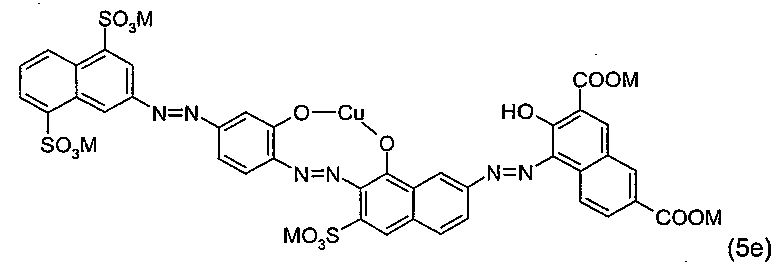

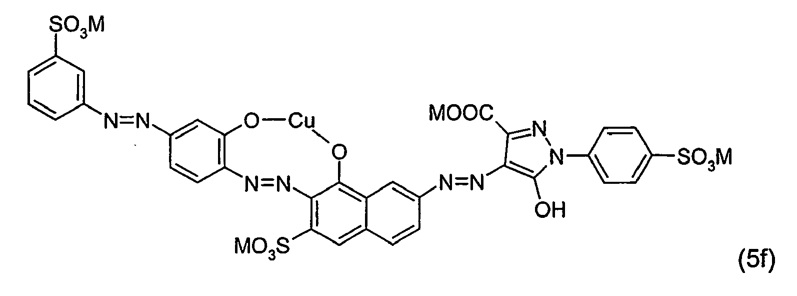

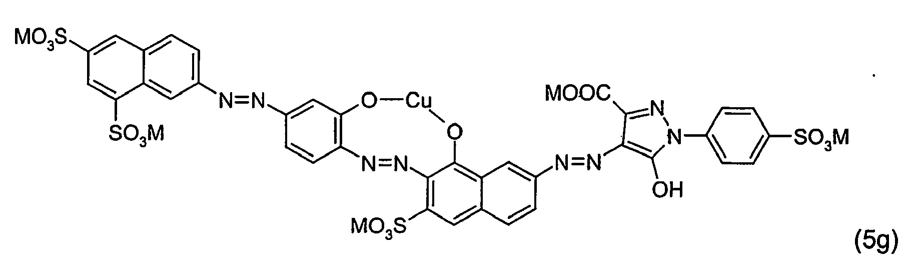

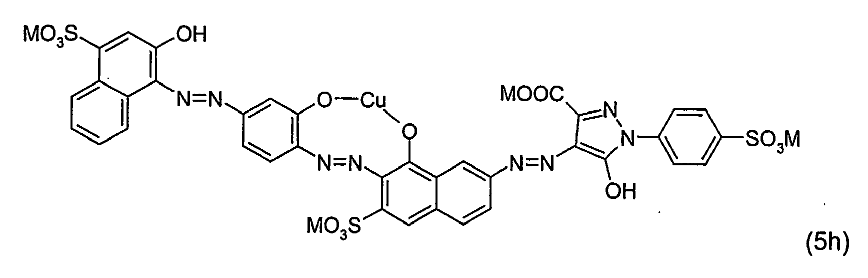

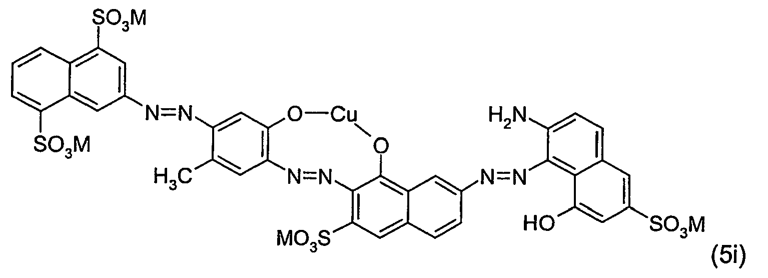

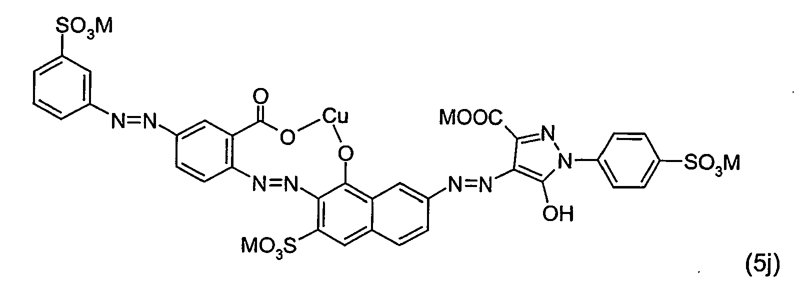

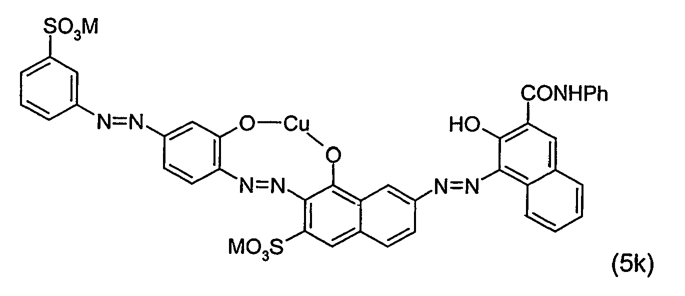

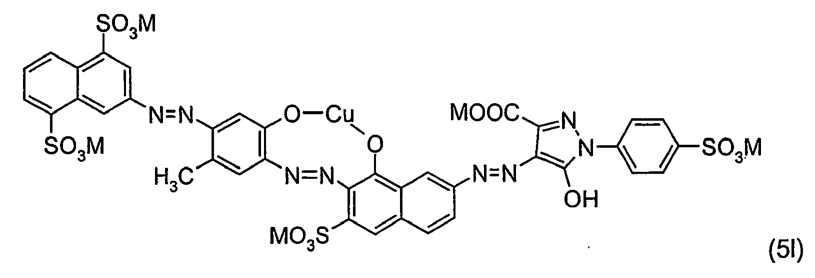

In den Farbstoffen der Formeln (5b) bis (5l) bedeutet M je nach pH-Wert vorzugsweise Wasserstoff und/oder Natrium.

Als organische Pigmente, die mit Schwermetallionen verunreinigt sein können, kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie zum Beispiel Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht.

Als anorganische Pigmente, die mit Schwermetallionen verunreinigt sein können, kommen beispielsweise Titandioxide, Zinksulfide, Eisenoxide, Chromoxide, Ultramarin, Nickel- oder Chromantimontitanoxide, Cobaltoxide sowie Bismutvanadate in Betracht.

Als beispielhafte Auswahl besonders bevorzugter organischer Pigmente sind dabei Rußpigmente, wie z.B. Gas- oder Furnaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder
Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61;
Diketopyrrolopyrrolpigmente, insbesondere die Colour Index Pigmente Pigment Red 254 zu nennen.

Dabei ist das Pigment in Form von feinverteilten Partikeln entweder alleine oder durch Dispergierhilfsmittel stabilisiert im flüssigen Medium vorhanden. Der mittlere Teilchendurchmesser liegt dabei bevorzugt im Bereich von 1 bis 1000 nm, besonders bevorzugt im Bereich von 10 bis 100 nm. Pigmente, die ohne Dispergierhilfsmittel stabilisiert werden können, sind als selbst-dispergierbare Pigmente bekannt. Dabei handelt es sich normalerweise um oberflächenmodifizierte Pigmente, deren Oberfläche durch chemische Prozesse wie beispielsweise Sulfonierung oder Diazotierung verändert und mit funktionellen, gegebenenfalls ladungstragenden Gruppen oder Polymerketten versehen wurde (in der englischsprachigen Literatur als self-dispersing bzw. graft pigments bezeichnet).

Als Dispergierhilfsmittel kommen dabei nichtionogene, amphotere, kationische oder anionische Tenside oder Polymere in Betracht.

Gegenstand der vorliegenden Erfindung sind auch wässrige Farbmittelpräparationen, vorzugsweise Aufzeichnungsflüssigkeiten, insbesondere Ink-Jet-Tinten, enthaltend 0,1 bis 50 Gew.-%, bevorzugt 0,5 bis 20 Gew.-%, mindestens eines Schwermetallkomplex-Farbmittels, 0,001 bis 0,1 Gew.-%, bevorzugt 0,01 bis 0,05 Gew.-%, der besagten antimikrobiellen Mischung, und 10 bis 90 Gew.-%, vorzugsweise 30 bis 80 Gew.-%, entionisierten Wassers, jeweils bezogen auf das Gesamtgewicht (100 Gew.-%) der Farbmittelpräparation.

Gegenstand der vorliegenden Erfindung sind außerdem wässrige Farbmittelpräparationen, vorzugsweise Aufzeichnungsflüssigkeiten, insbesondere Ink-Jet-Tinten, enthaltend mindestens 20 ppm an Schwermetallionen und 0,1 bis 50 Gew.-%, bevorzugt 0,5 bis 20 Gew.-%, mindestens eines Farbmittels, 0,001 bis 0,1 Gew.-%, bevorzugt 0,01 bis 0,05 Gew.-%, der besagten antimikrobiellen Mischung und 10 bis 90 Gew.-%, vorzugsweise 30 bis 80 Gew.-%, entionisierten Wassers, jeweils bezogen auf das Gesamtgewicht (100 Gew.-%) der Farbmittelpräparation.

Zur Herstellung der Aufzeichnungsflüssigkeiten benutztes Wasser wird vorzugsweise in Form von destilliertem oder entsalztem Wasser eingesetzt.

Die erfindungsgemäßen Farbmittelpräparationen können, abhängig von den eingesetzten Farbstoffen, zusätzlich noch ein Nuancierfarbmittel enthalten, vorzugsweise aus der Gruppe C.I. Acid Yellow 17 und C.I. Acid Yellow 23; C.I. Direct Yellow 86, C.I. Direct Yellow 98 und C.I. Direct Yellow 132; C.I. Reactive Yellow 37; C.I. Pigment Yellow 17, C.I. Pigment Yellow 74, C.I. Pigment Yellow 83, C.I. Pigment Yellow 97, C.I. Pigment Yellow 120, C.I. Pigment Yellow 139, C.I. Pigment Yellow 151, C.I. Pigment Yellow 155 und C.I. Pigment Yellow 180; C.I. Direct Red 1, C.I. Direct Red 11, C.I. Direct Red 37, C.I. Direct Red 62, C.I. Direct Red 75, C.I. Direct Red 81, C.I. Direct Red 87, C.I. Direct Red 89, C.I. Direct Red 95 und C.I. Direct Red 227; C.I. Acid Red 1, C.I. Acid Red 8, C.I. Acid Red 80, C.I. Acid Red 81, C.I. Acid Red 82, C.I. Acid Red 87, C.I. Acid Red 94, C.I. Acid Red 115, C.I. Acid Red 131, C.I. Acid Red 144, C.I. Acid Red 152, C.I. Acid Red 154, C.I. Acid Red 186, C.I. Acid Red 245, C.I. Acid Red 249 und C.I. Acid Red 289; C.I. Reactive Red 21, C.I. Reactive Red 22, C.I. Reactive Red 23, C.I. Reactive Red 35, C.I. Reactive Red 63, C.I. Reactive Red 106, C.I. Reactive Red 107, C.I. Reactive Red 112, C.I. Reactive Red 113, C.I. Reactive Red 114, C.I. Reactive Red 126, C.I. Reactive Red 127, C.I. Reactive Red 128, C.I. Reactive Red 129, C.I. Reactive Red 130, C.I. Reactive Red 131, C.I. Reactive Red 137, C.I. Reactive Red 160, C.I. Reactive Red 161, C.I. Reactive Red 174 und C.I. Reactive Red 180; C.I. Pigment Red 122, C.I. Pigment Red 176, C.I. Pigment Red 184, C.I. Pigment Red 185 und C.I. Pigment Red 269; C.I. Direct Blue 199; C.I. Acid Blue 9; C.I. Pigment Blue 15:1-15:4. Das Nuancierfarbmittel ist vorzugsweise in einer Menge von 0,001 bis 5 Gew.-%, insbesondere von 0,01 bis 1 Gew.-%, bezogen auf das Trockengewicht der Gesamtfarbmittel, enthalten.

Die erfindungsgemäßen Farbmittelpräparationen können weiterhin noch organische Lösemittel, Feuchthaltemittel, organische oder anorganische Basen oder Säuren, kationische, anionische oder nichtionogene oberflächenaktive Substanzen (Tenside und Netzmittel), sowie Mittel zur Regulierung der Viskosität, z.B. Polyvinylalkohol, Cellulosederivate oder wasserlösliche natürliche oder künstliche Harze als Filmbildner bzw. Bindemittel zur Erhöhung der Haft- und Abriebfestigkeit sowie Lichtschutzmittel in üblichen Mengen enthalten.

Geeignete Feuchthaltemittel sind beispielsweise Formamid, Harnstoff, Tetramethylharnstoff, ε-Caprolactam, Ethylenglykol, Propylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Thiodiglykol, Natrium-Benzolsulfonat, Natrium-Toluolsulfonat, Natrium-Xylolsulfonat, Natrium-Cumolsulfonat, Natrium-Dodecylsulfonat, Natrium-Benzoat, Natrium-Salicylat und Natrium-Butylmonoglykolsulfat.
Geeignete Lösemittel sind beispielsweise ein- oder mehrwertige Alkohole, deren Ether und Ester, z.B. Methanol, Ethanol, Propanol, Isopropanol, Butanol, Isobutanol; zwei- oder dreiwertige Alkohole, insbesondere mit 2 bis 6 C-Atomen, z.B. Ethylenglykol, Propylenglykol, 1,3-Propandiol, 1,4-Butandiol, 1,5-Pentandiol, 1,6-Hexandiol, Neopentylglykol, 1,2,6-Hexantriol, Glycerin, 2-Ethyl-2-hydroxymethyl-1,3-propandiol, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykol-mono-methyl, -ethyl- oder -butylether, Triethylenglykol-mono-methyl- oder -ethyl-ether; Ketone und Ketonalkohole wie z.B. Aceton, Methylethylketon, Diethylketon, Methylisobutylketon, Methylpentylketon, Cyclopentanon, Cyclohexanon, Diacetonalkohol; Amide, wie z.B. Dimethylformamid, Dimethylacetamid, N-Methylpyrrolidon; ferner Harnstoff, Tetramethylharnstoff, Thiodiglykol, ε-Caprolactam.
Geeignete Basen sind z.B. Ethanolamin, Diethanolamin, Triethanolamin, N,N-Dimethylethanolamin, Diisopropylamin.

Den Aufzeichnungsflüssigkeiten für das Ink-Jet-Druckverfahren können je nach Ausführungsform dieses Druckverfahrens, z.B. als Continuous-Jet-, Intermittent-Jet-, Impuls-Jet- oder Compound-Jet-Verfahren, noch weitere Additive, z.B. zur Pufferung des pH-Wertes, zur Einstellung der elektrischen Leitfähigkeit, der spezifischen Wärme, des thermischen Expansionskoeffizienten und der Leitfähigkeit, zugesetzt werden.

Die erfindungsgemäßen Farbmittelpräparationen können hergestellt werden, indem man die genannten Komponenten in Form trockener Pulver, ihrer Lösungen, wasser- oder lösemittelfeuchten Presskuchen miteinander mischt.

Für den Einsatz in Aufzeichnungsflüssigkeiten werden die beschriebenen Farbmittel den genannten Anforderungen entsprechend aufbereitet. Die Farbstoffe können aus den zunächst erhaltenen, bevorzugt wässrigen Reaktionsgemischen durch Aussalzen und Filtrieren oder durch Sprühtrocknung, gegebenenfalls nach teilweiser oder vollständiger Entsalzung mittels Membranfiltration, isoliert werden. Es kann jedoch auch auf eine Isolierung verzichtet und die Farbstoffe enthaltenden Reaktionsmischungen durch Zusatz von organischen und/oder anorganischen Basen, eventuell Feuchthaltemitteln, Konservierungsmitteln und gegebenenfalls nach teilweiser oder vollständiger Entsalzung mittels Membranfiltration direkt in konzentrierte Farbstofflösungen überführt werden. Alternativ können die Farbstoffe auch als Presskuchen (gegebenenfalls auch in Flush-Verfahren) oder als Pulver eingesetzt werden. Vorteilhafterweise werden die erfindungsgemäßen Farbstoffmischungen in möglichst salzfreier Form, d.h. frei von NaCl oder anderen üblichen anorganischen Salzen, die bei der Synthese der Farbstoffe entstanden sind, eingesetzt.

Im Falle der Pigment-Farbmittel wird vorzugsweise dabei so verfahren, dass in einem ersten Schritt mindestens ein Pigment, entweder als Pulver oder als Presskuchen, gegebenenfalls zusammen mit mindestens einem Dispergiermittel, gegebenenfalls mit mindestens einem organischen Lösemittel, gegebenenfalls mit mindestens einer hydrotropen Substanz und gegebenenfalls den anderen Zusätzen in entionisiertem Wasser angeteigt und anschließend mit einem Dissolver oder einer anderen geeigneten Apparatur homogenisiert und vordispergiert wird. Die Feindispergierung erfolgt daran anschließend mit Hilfe einer Perlmühle oder einem anderen geeigneten Dispergieraggregat, wobei die Feindispergierung bzw. Mahlung unter Kühlung bis zur gewünschten Teilchengrößenverteilung der Farbmittel-, insbesondere Pigmentpartikel, erfolgt. Im Anschluss an die Feindispergierung kann die Dispersion mit entionisiertem Wasser weiter verdünnt werden.

Die erfindungsgemäßen Farbmittelpräparationen können zum Färben und Bedrucken von natürlichen und synthetischen Fasermaterialien (z.B. Polyester, Seide, Wolle, Mischgewebe), insbesondere zur Aufzeichnung von Schrift und Bildern auf verschiedenen Aufzeichnungsmedien, sowie zum Färben von Papier oder Zellstoffen in der Masse verwendet werden.
Bei der Lagerung erfindungsgemäßer Aufzeichnungsflüssigkeiten tritt keine Abscheidung von Niederschlägen auf, welche zu unscharfen Druckbildern oder zur Verstopfung von Düsen führt.
Die erfindungsgemäßen Aufzeichnungsflüssigkeiten liegen hinsichtlich Viskosität und Oberflächenspannung in den für Ink-Jet-Verfahren geeigneten Bereichen. Sie liefern Druckbilder hoher optischer Dichte mit ausgezeichneter Licht- und Wasserechtheit.
Die erfindungsgemäßen Farbmittelpräparationen sind auch geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Latextoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäßen Farbmittelpräparationen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen. Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Farbmittelpräparationen auch geeignet als Farbmittel für Farbfilter, sowohl für die additive wie für die subtraktive Farberzeugung, sowie als Farbmittel für elektronische Tinten ("electronic inks" bzw. "e-inks") oder "electronic paper" ("e-paper").

Die erfindungsgemäß verwendete antimikrobielle Mischung zeigt eine hohe Wirksamkeit gegen eine Vielzahl üblicher Keime in einem breiten pH-Bereich. Auch bei längerer Lagerung treten keine Ausfällungen von Schwermetall-Wirkstoffkomplexen auf.
In den nachstehenden Beispielen bedeuten Teile Gewichtsteile.

### Beispiel 1

1000 Teile einer 10 gew.-%igen wässrigen Lösung von Direct Blue 199 (5a) (synthesebedingter Gehalt an ionogenem Kupfer 80 ppm) werden mit verschiedenen Biociden auf die in Tabelle 1 wiedergegebenen Konzentrationen versetzt. Bei den weiteren Versuchen werden zusätzlich 100 ppm an zweiwertigen Kationen (in Form ihrer Metallsalze) zugegeben. Nach Rühren werden die entstehenden Lösungen durch ein Papierfilter (Schleicher&Schuell Ref.
No. 14812) abgesaugt. Das Papierfilter wird auf das Auftreten eines Niederschlags, hervorgerufen durch die Bildung des entsprechenden Biocid-Schwermetallkomplexes, untersucht. Die Ergebnisse sind in Tabelle 1 gezeigt.

**Tabelle 1 (10 %ige Lösung Direct Blue 199)**

| Wirkstoff | Handelsname | Reine Farbstofflösung | Cu²⁺ | Zn²⁺ | Fe³⁺ |
|---|---|---|---|---|---|
| 0,01% BIT | Mergal K10N | + | ++ | ++ | ++ |
| | (Troy) | | | | |
| 0,01% BIT | Nipacide BIT20 | + | ++ | ++ | ++ |
| | (Clariant) | | | | |
| 0,01% BIT | Proxel GXL | + | ++ | ++ | ++ |
| | (Avecia) | | | | |
| 0,018% Bronopol | Nipacide IB | --- | --- | --- | --- |
| 0,0011% CMIT | (Clariant) | | | | |
| 0,00037% MIT | | | | | |

| | | | | | |
|---|---|---|---|---|---|
| --- kein Niederschlag + Bildung eines Niederschlags ++ Starke Bildung eines Niederschlags BIT 1,2-Benzisothiazolin-3-on | | | | | |

Es zeigt sich, dass das erfindungsgemäße Biocidgemisch im Gegensatz zu den herkömmlichen Biociden mit keinem der untersuchten Schwermetallkationen unlösliche Komplexe bildet. Die Vergleichsbiocide führen bei Anwesenheit von Cu²⁺, Zn²⁺ oder Fe³⁺ zu einer starken Bildung von Niederschlägen.

### Beispiel 2

Man mischt 1000 Teile einer 10 gew.-%igen wässrigen Lösung von Direct Blue 199 (5a) mit 0,18 Teilen 2-Bromo-2-nitropropan-1,3-diol, 0,011 Teilen 5-Chloro-2-methyl-4-isothiazolin-3-on und 0,0037 Teilen 2-Methyl-4-isothiazolin-3-on sowie 0,018 Teilen Magnesiumnitrat und 0,01 Teilen Magnesiumchlorid.

### Beispiel 3

Man mischt 1000 Teile einer 15 gew.-%igen wässrigen Lösung von Reactive Black 31 (5b) mit 0,18 Teilen 2-Bromo-2-nitropropan-1,3-diol, 0,011 Teilen 5-Chloro-2-methyl-4-isothiazolin-3-on und 0,0037 Teilen 2-Methyl-4-isothiazolin-3-on sowie 0,018 Teilen Magnesiumnitrat und 0,01 Teilen Magnesiumchlorid.

Die beiden Farbstofflösungen von Direct Blue 199 und Reactive Black 31 sowie die entsprechenden Kontrollfarbstofflösungen ohne Biocide wurden in einem Belastungstest mit einem Mikroorganismengemisch aus folgenden Bakterien, Pilzen und Hefen wöchentlich versetzt:
Bakterien:
   Pseudomonas versicolor
   Alcaligenens faecalis
   Enterobacter aerogenes
   Escherichia coli
   Providencia rettgeri
   Myroides odoratus
   Pilze:
      Fusarium solani
      Geotrichum candidum
      Aspergillus terreus
      Hefe:
         Rhodotorula rubra

Anschließend wurde die Keimbelastung durch Bestimmung der Keimzahl auf geeigneten Nährmedien getestet. Bei den beiden Kontrollproben ohne Biocid wurde bereits nach wenigen Tagen ein starkes Keimwachstum nachgewiesen, während bei der Farbstofflösung mit Biocidgemisch auch nach 5 Wochen keine vermehrungsfähigen Mikroorganismen festgestellt werden konnten.

### Beispiele 4 bis 7 (Pigmente)

Das Pigment wurde, entweder als Pulver oder als Presskuchen, zusammen mit den Dispergiermitteln, dem organischen Lösemittel und den anderen Zusätzen in entionisiertem Wasser angeteigt und dann mit einem Dissolver homogenisiert und vordispergiert. Die anschließende Feindispergierung erfolgte mit Hilfe einer Perlmühle, wobei die Mahlung unter Kühlung bis zur gewünschten Teilchengrößenverteilung der Pigmentpartikel erfolgte. Im Anschluss wurde die Dispersion mit entionisiertem Wasser auf die gewünschte Pigmentendkonzentration eingestellt.

Die in den folgenden Beispielen 4 bis 7 beschriebenen Pigmentpräparationen wurden nach dem zuvor beschriebenen Verfahren hergestellt, wobei die folgenden Bestandteile in den angegebenen Mengen so verwendet wurden, dass 100 Teile der jeweiligen Pigmentpräparation entstehen:

### Beispiel 4

| | |
|---|---|
| 20 Teile | Pigment Yellow 155 |
| 2,5 Teile | Acrylatharz, Na-Salz (Dispergiermittel) |
| 1,2 Teile | Polyethylenglykolalkylether, Na-Salz (Dispergiermittel) |
| 0,018 Teile | 2-Bromo-2-nitropropan-1,3-diol |
| 0,0011 Teile | 5-Chloro-2-methyl-4-isothiazolin-3-on |
| 0,00037 Teile | 2-Methyl-4-isothiazolin-3-on |
| 0,0018 Teile | Magnesiumnitrat |
| 0,001 Teile | Magnesiumchlorid |
| Rest | E-Wasser |

### Beispiel 5

| | |
|---|---|
| 20 Teile | Pigment Red 122 |
| 2,5 Teile | Acrylatharz, Na-Salz (Dispergiermittel) |
| 1,2 Teile | Polyethylenglykolalkylether, Na-Salz (Dispergiermittel) |
| 0,018 Teile | 2-Bromo-2-nitropropan-1,3-diol |
| 0,0011 Teile | 5-Chloro-2-methyl-4-isothiazolin-3-on |
| 0,00037 Teile | 2-Methyl-4-isothiazolin-3-on |
| 0,0018 Teile | Magnesiumnitrat |
| 0,001 Teile | Magnesiumchlorid |
| Rest | E-Wasser |

### Beispiel 6

| | |
|---|---|
| 20 Teile | Pigment Blue 15:3 |
| 2,5 Teile | Acrylatharz, Na-Salz (Dispergiermittel) |
| 1,2 Teile | Polyethylenglykolalkylether, Na-Salz (Dispergiermittel) |
| 0,018 Teile | 2-Bromo-2-nitropropan-1,3-diol |
| 0,0011 Teile | 5-Chloro-2-methyl-4-isothiazolin-3-on |
| 0,00037 Teile | 2-Methyl-4-isothiazolin-3-on |
| 0,0018 Teile | Magnesiumnitrat |
| 0,001 Teile | Magnesiumchlorid |
| Rest | E-Wasser |

### Beispiel 7

| | |
|---|---|
| 15 Teile | Russ (Pigment Black 7) |
| 2,5 Teile | Acrylatharz, Na-Salz (Dispergiermittel) |
| 0,6 Teile | Polyethylenglykolalkylether, Na-Salz (Dispergiermittel) |
| 0,018 Teile | 2-Bromo-2-nitropropan-1,3-diol |
| 0,0011 Teile | 5-Chloro-2-methyl-4-isothiazolin-3-on |
| 0,00037 Teile | 2-Methyl-4-isothiazolin-3-on |
| 0,0018 Teile | Magnesiumnitrat |
| 0,001 Teile | Magnesiumchlorid |
| Rest | E-Wasser |

### Vergleichsbeispiel

Beispiel 4 wurde wiederholt, nur dass im Gegensatz dazu das Biocid weggelassen wurde, so dass sich folgende Zusammensetzung ergibt:

| | |
|---|---|
| 20 Teile | Pigment Yellow 155 |
| 2,5 Teile | Acrylatharz, Na-Salz (Dispergiermittel) |
| 1,2 Teile | Polyethylenglykolalkylether, Na-Salz (Dispergiermittel) |
| Rest | E-Wasser |

Anschließend wurde die Keimbelastung durch Bestimmung der Keimzahl auf geeigneten Nährmedien getestet. Bei der Kontrollprobe ohne Biocid (Vergleichsbeispiel) wurde bereits nach wenigen Tagen ein starkes Keimwachstum nachgewiesen, während bei den Pigmentdispersionen mit Biocidgemisch (Beispiele 4-7) auch nach 1 Woche keine vermehrungsfähigen Mikroorganismen festgestellt werden konnten.

## Patentansprüche

1. Verwendung einer antimikrobiell wirksamen Menge einer Mischung aus 5-Chloro-2-methyl-4-isothiazolin-3-on, 2-Methyl-4-isothiazolin-3-on und 2-Bromo-2-nitropropan-1,3-diol als Biocid in wasserhaltigen Farbmittelpräparationen, die eine Schwermetallionenkonzentration von größer oder gleich 20 ppm aufweisen, und wobei das Farbmittel ein Reaktivfarbstoff, Direktfarbstoff, Säurefarbstoff, Dispersionsfarbstoff oder Pigment ist, und ein Schwermetall aus der Gruppe Cu, Co, Ni, Fe, Cr und Al komplex gebunden enthält.

2. Verwendung nach Anspruch 1, **dadurch gekennzeichnet, dass** die Farbmittelpräparation eine Aufzeichnungsflüssigkeit, insbesondere Ink-Jet-Tinte, ist.

3. Verwendung nach Anspruch 1 oder 2, **dadurch gekennzeichnet, dass** die antimikrobiell wirksame Menge 0,001 bis 0,1 Gew.-%, bevorzugt 0,02 Gew.-%, gerechnet als Feststoff und bezogen auf das Gesamtgewicht der Farbmittelpräparation, beträgt.

4. Verwendung nach mindestens einem der Ansprüche 1 bis 3, **dadurch gekennzeichnet, dass** das Mengenverhältnis der Einzelbestandteile Chloro-2-methyl-4-isothiazolin-3-on, 2-Methyl-4-isothiazolin-3-on und 2-Bromo-2-nitropropan-1,3-diol (0,005 bis 0,1): (0,005 bis 0,05): 1 beträgt.

5. Verwendung nach Anspruch 5, **dadurch gekennzeichnet, dass** das Farbmittel C.I. Reactive Black 8, C.I. Reactive Black 31, C.I. Reactive Blue 7, C.I. Reactive Blue 14, C.I. Reactive Blue 21, C.I. Reactive Blue 28, C.I. Reactive Blue 38, C.I. Reactive Blue 82, C.I. Reactive Blue 89, C.I. Reactive Blue 158, C.I. Reactive Blue 182, C.I. Reactive Blue 190, C.I. Reactive Blue 203, C.I. Reactive Blue 216, C.I. Reactive Blue 220, C.I. Reactive Blue 244, C.I. Reactive Violet 1, C.I. Reactive Violet 5, C.I. Reactive Red 6, C.I. Reactive Red 23, C.I. Reactive Brown 18, C.I Direct Blue 76, C.I. Direct Blue 84, C.I. Direct Blue 86, C.I. Direct Blue 87, C.I. Direct Blue 98, C.I. Direct Blue 199, C.I. Direct Blue 202, C.I. Direct Blue 290, C.I. Direct Black 112, C.I. Direct Brown 95, C.I. Direct Violet 47, C.I. Acid Blue 87, C.I. Acid Blue 185, C.I. Acid Blue 249, C.I. Pigment Blue 15:1-15:4, C.I. Pigment Blue 17, C.I. Pigment Green 7, C.I. Pigment Green 37, C.I. Pigment Red 257, C.I. Pigment Red 271, C.I. Pigment Orange 65, C.I. Pigment Orange 68, C.I. Pigment Yellow 117, C.I. Pigment Yellow 129 oder C.I. Pigment Yellow 153 ist.

6. Wässrige Farbmittelpräparation, enthaltend 0,1 bis 50 Gew.-% mindestens eines Schwermetallkomplex-Farbmittels, 0,001 bis 0,1 Gew.-% einer antimikrobiellen Mischung nach einem oder mehreren der Ansprüche 1 bis 4 und 10 bis 90 Gew.-% entionisierten Wassers, jeweils bezogen auf das Gesamtgewicht (100 Gew.-%) der Farbmittelpräparation.

7. Wässrige Farbmittelpräparation, enthaltend mindestens 20 ppm an Schwermetallionen und 0,1 bis 50 Gew.-% mindestens eines Farbmittels, 0,001 bis 0,1 Gew.-% einer antimikrobiellen Mischung nach einem oder mehreren der Ansprüche 1 bis 4, und 10 bis 90 Gew.-% entionisierten Wassers, jeweils bezogen auf das Gesamtgewicht (100 Gew.-%) der Farbmittelpräparation.

8. Farbmittelpräparation nach Anspruch 6 oder 7, enthaltend ein Nuancierfarbmittel aus der Gruppe C.I. Acid Yellow 17 und C.I. Acid Yellow 23; C.I. Direct Yellow 86, C.I. Direct Yellow 98 und C.I. Direct Yellow 132; C.I. Reactive Yellow 37; C.I. Pigment Yellow 17, C.I. Pigment Yellow 74, C.I. Pigment Yellow 83, C.I. Pigment Yellow 97, C.I. Pigment Yellow 120, C.I. Pigment Yellow 139, C.I. Pigment Yellow 151, C.I. Pigment Yellow 155 und C.I. Pigment Yellow 180; C.I. Direct Red 1, C.I. Direct Red 11, C.I. Direct Red 37, C.I. Direct Red 62, C.I. Direct Red 75, C.I. Direct Red 81, C.I. Direct Red 87, C.I. Direct Red 89, C.I. Direct Red 95 und C.I. Direct Red 227; C.I. Acid Red 1, C.I. Acid Red 8, C.I. Acid Red 80, C.I. Acid Red 81, C.I. Acid Red 82, C.I. Acid Red 87, C.I. Acid Red 94, C.I. Acid Red 115, C.I. Acid Red 131, C.I. Acid Red 144, C.I. Acid Red 152, C.I. Acid Red 154, C.I. Acid Red 186, C.I. Acid Red 245, C.I. Acid Red 249 und C.I. Acid Red 289; C.I. Reactive Red 21, C.I. Reactive Red 22, C.I. Reactive Red 23, C.I. Reactive Red 35, C.I. Reactive Red 63, C.I. Reactive Red 106, C.I. Reactive Red 107, C.I. Reactive Red 112, C.I. Reactive Red 113, C.I. Reactive Red 114, C.I. Reactive Red 126, C.I. Reactive Red 127, C.I. Reactive Red 128, C.I. Reactive Red 129, C.I. Reactive Red 130, C.I. Reactive Red 131, C.I. Reactive Red 137, C.I. Reactive Red 160, C.I. Reactive Red 161, C.I. Reactive Red 174 und C.I. Reactive Red 180; C.I. Pigment Red 122, C.I. Pigment Red 176, C.I. Pigment Red 184, C.I. Pigment Red 185 und C.I. Pigment Red 269; C.I. Direct Blue 199; C.I. Acid Blue 9 und C.I. Pigment Blue 15:1-15:4 in einer Menge von 0,001 bis 5 Gew.-%, insbesondere von 0,01 bis 1 Gew.-%, bezogen auf das Trockengewicht des gesamten Farbmittels.

## Claims

1. A use of an antimicrobially effective amount of a mixture of 5-chloro-2-methyl-4-isothiazolin-3-one, 2-methyl-4-isothiazolin-3-one and 2-bromo-2-nitropropane-1,3-diol as a biocide in aqueous colorant preparations having a heavy metal ion concentration of not less than 20 ppm and wherein the colorant is a reactive dye, a direct dye, an acid dye, a disperse dye or a pigment and comprises a complexed heavy metal from the group consisting of Cu, Co, Ni, Fe, Cr and Al.

2. The use according to claim 1 wherein the colorant preparation is a recording fluid, in particular an ink jet ink.

3. The use according to claim 1 or 2 wherein the antimicrobially effective amount is 0.001% to 0.1% by weight and preferably 0.02% by weight, reckoned as solid and based on the total weight of the colorant preparation.

4. The use according to at least one of claims 1 to 3 wherein the mixing ratio of the individual constituents chloro-2-methyl-4-isothiazolin-3-one, 2-methyl-4-isothiazolin-3-one and 2-bromo-2-nitropropane-1,3-diol is (0.005 to 0.1):(0.005 to 0.05):1.

5. The use according to claim 4 wherein the colorant is C.I. Reactive Black 8, C.I. Reactive Black 31, C.I. Reactive Blue 7, C.I. Reactive Blue 14, C.I. Reactive Blue 21, C.I. Reactive Blue 28, C.I. Reactive Blue 38, C.I. Reactive Blue 82, C.I. Reactive Blue 89, C.I. Reactive Blue 158, C.I. Reactive Blue 182, C.I. Reactive Blue 190, C.I. Reactive Blue 203, C.I. Reactive Blue 216, C.I. Reactive Blue 220, C.I. Reactive Blue 244, C.I. Reactive Violet 1, C.I. Reactive Violet 5, C.I. Reactive Red 6, C.I. Reactive Red 23, C.I. Reactive Brown 18, C.I Direct Blue 76, C.I. Direct Blue 84, C.I. Direct Blue 86, C.I. Direct Blue 87, C.I. Direct Blue 98, C.I. Direct Blue 199, C.I. Direct Blue 202, C.I. Direct Blue 290, C.I. Direct Black 112, C.I. Direct Brown 95, C.I. Direct Violet 47, C.I. Acid Blue 87, C.I. Acid Blue 185, C.I. Acid Blue 249, C.I. Pigment Blue 15:1-15:4, C.I. Pigment Blue 17, C.I. Pigment Green 7, C.I. Pigment Green 37, C.I. Pigment Red 257, C.I. Pigment Red 271, C.I. Pigment Orange 65, C.I. Pigment Orange 68, C.I. Pigment Yellow 117, C.I. Pigment Yellow 129 or C.I. Pigment Yellow 153.

6. An aqueous colorant preparation comprising 0.1% to 50% by weight of at least one heavy metal complex colorant, 0.001% to 0.1% by weight of an antimicrobial mixture according to one or more of claims 1 to 4 and 10% to 90% by weight of deionized water, all based on the total weight (100% by weight) of the colorant preparation.

7. An aqueous colorant preparation comprising at least 20 ppm of heavy metal ions and 0.1% to 50% by weight of at least one colorant, 0.001% to 0.1% by weight of an antimicrobial mixture according to one or more of claims 1 to 4 and 10% to 90% by weight of deionized water, all based on the total weight (100% by weight) of the colorant preparation.

8. The colorant preparation according to claim 6 or 7 which comprises a shading colorant from the group consisting of C.I. Acid Yellow 17 and C.I. Acid Yellow 23; C.I. Direct Yellow 86, C.I. Direct Yellow 98 and C.I. Direct Yellow 132; C.I. Reactive Yellow 37; C.I. Pigment Yellow 17, C.I. Pigment Yellow 74, C.I. Pigment Yellow 83, C.I. Pigment Yellow 97, C.I. Pigment Yellow 120, C.I. Pigment Yellow 139, C.I. Pigment Yellow 151, C.I. Pigment Yellow 155 and C.I. Pigment Yellow 180; C.I. Direct Red 1, C.I. Direct Red 11, C.I. Direct Red 37, C.I. Direct Red 62, C.I. Direct Red 75, C.I. Direct Red 81, C.I. Direct Red 87, C.I. Direct Red 89, C.I. Direct Red 95 and C.I. Direct Red 227; C.I. Acid Red 1, C.I. Acid Red 8, C.I. Acid Red 80, C.I. Acid Red 81, C.I. Acid Red 82, C.I. Acid Red 87, C.I. Acid Red 94, C.I. Acid Red 115, C.I. Acid Red 131, C.I. Acid Red 144, C.I. Acid Red 152, C.I. Acid Red 154, C.I. Acid Red 186, C.I. Acid Red 245, C.I. Acid Red 249 and C.I. Acid Red 289; C.I. Reactive Red 21, C.I. Reactive Red 22, C.I. Reactive Red 23, C.I. Reactive Red 35, C.I. Reactive Red 63, C.I. Reactive Red 106, C.I. Reactive Red 107, C.I. Reactive Red 112, C.I. Reactive Red 113, C.I. Reactive Red 114, C.I. Reactive Red 126, C.I. Reactive Red 127, C.I. Reactive Red 128, C.I. Reactive Red 129, C.I. Reactive Red 130, C.I. Reactive Red 131, C.I. Reactive Red 137, C.I. Reactive Red 160, C.I. Reactive Red 161, C.I. Reactive Red 174 and C.I. Reactive Red 180; C.I. Pigment Red 122, C.I. Pigment Red 176, C.I. Pigment Red 184, C.I. Pigment Red 185 and C.I. Pigment Red 269; C.I. Direct Blue 199; C.I. Acid Blue 9 and C.I. Pigment Blue 15:1-15:4 in an amount of 0.001% to 5% by weight and in particular of 0.01% to 1% by weight, based on the dry weight of the entire colorant.

## Revendications

1. Utilisation d'une quantité antimicrobienne efficace d'un mélange de 5-chloro-2-méthyl-4-isothiazolin-3-one, 2-méthyl-4-isothiazolin-3-one et 2-bromo-2-nitropropane-1,3-diol comme biocide dans des préparations aqueuses de colorants, qui présentent une concentration en ions de métaux lourds supérieure ou égale à 20 ppm, et dans laquelle le colorant est un colorant réactif, un colorant direct, un colorant acide, un colorant de dispersion ou un pigment, et contient, lié à un complexe, un métal lourd du groupe de Cu, Co, Ni, Fe, Cr et Al.

2. Utilisation selon la revendication 1, **caractérisée en ce que** la préparation de colorant est un liquide d'enregistrement, en particulier en encre pour jet d'encre.

3. Utilisation selon la revendication 1 ou 2, **caractérisée en ce que** la quantité antimicrobienne efficace est de 0,001 à 0,1 % en poids, de préférence de 0,02 % en poids, calculée sous forme de matière solide et par rapport au poids total de la préparation de colorant.

4. Utilisation selon au moins l'une des revendications 1 à 3, **caractérisée en ce que** le rapport en quantité des constituants individuels 5-chloro-2-méthyl-4-isothiazolin-3-one, 2-méthyl-4-isothiazolin-3-one et 2-bromo-2-nitropropane-1,3-diol est de (0,005 à 0,1):(0,005 à 0,05):1.

5. Utilisation selon la revendication 5, **caractérisée en ce que** le colorant est C.I. Reactive Black 8, C.I. Reactive Black 31, C.I. Reactivé Blue 7, C.I. Reactive Blue 14, C.I. Reactive Blue 21, C.I. Reactive Blue 28, C.I. Reactive Blue 38, C.I. Reactive Blue 82, C.I. Reactive Blue 89, C.I. Reactive Blue 158, C.I. Reactive Blue 182, C.I. Reactive Blue 190, C.I. Reactive Blue 203, C.I. Reactive Blue 216, C.I. Reactive Blue 220, C.I. Reactive Blue 244, C.I. Reactive Violet 1, C.I. Reactive Violet 5, C.I. Reactive Red 6, C.I. Reactive Red 23, C.I. Reactive Brown 18, C.I. Direct Blue 76, C.I. Direct Blue 84, C.I. Direct Blue 86, C.I. Direct Blue 87, C.I. Direct Blue 98, C.I. Direct Blue 199, C.I. Direct Blue 202, C.I. Direct Blue 290, C.I. Direct Black 112, C.I. Direct Brown 95, C.I. Direct Violet 47, C.I. Acid Blue 87, C.I. Acid Blue 185, C.I. Acid Blue 249, C.I. Pigment Blue 15:1-15:4, C.I. Pigment Blue 17, C.I. Pigment Green 7, C.I. Pigment Green 37, C.I. Pigment Red 257, C.I. Pigment Red 271, C.I. Pigment Orange 65, C.I. Pigment Orange 68, C.I. Pigment Yellow 117, C.I. Pigment Yellow 129 ou C.I. Pigment Yellow 153.

6. Préparation aqueuse de colorant, contenant 0,1 à 50 % en poids d'au moins un complexe de métal lourd-colorant, 0,001 à 0,1 % en poids d'un mélange antimicrobien selon une ou plusieurs des revendications 1 à 4 et 10 à 90 % en poids d'eau désionisée, respectivement par rapport au poids total (100 % en poids) de la préparation de colorant.

7. Préparation aqueuse de colorant, contenant au moins 20 ppm d'ions de métaux lourds, et 0,1 à 50 % en poids d'au moins un colorant, 0,001 à 0,1 % en poids d'un mélange antimicrobien selon une ou plusieurs des revendications 1 à 4, et 10 à 90 % en poids d'eau désionisée, respectivement par rapport au poids total (100 % en poids) de la préparation de colorant.

8. Préparation de colorant selon la revendication 6 ou 7, contenant un colorant de nuançage du groupe C.I. Acid Yellow 17 et C.I. Acid Yellow 23 ; C.I. Direct Yellow 86, C.I. Direct Yellow 98 et C.I. Direct Yellow 132; C.I. Reactive Yellow 37; C.I. Pigment Yellow 17, C.I. Pigment Yellow 74, C.I. Pigment Yellow 83, C.I. Pigment Yellow 97, C.I. Pigment Yellow 120, C.I. Pigment Yellow 139, C.I. Pigment Yellow 151, C.I. Pigment Yellow 155 et C.I. Pigment Yellow 180; C.I. Direct Red 1, C.I. Direct Red 11, C.I. Direct Red 37, C.I. Direct Red 62, C.I. Direct Red 75, C.I. Direct Red 81, C.I. Direct Red 87, C.I. Direct Red 89, C.I. Direct Red 95 et C.I. Direct Red 227; C.I. Acid Red 1, C.I. Acid Red 8, C.I. Acid Red 80, C.I. Acid Red 81, C.I. Acid Red 82, C.I. Acid Red 87, C.I. Acid Red 94, C.I. Acid Red 115, C.I. Acid Red 131, C.I. Acid Red 144, C.I. Acid Red 152, C.I. Acid Red 154, C.I. Acid Red 186, C.I. Acid Red 245, C.I. Acid Red 249 und C.I. Acid Red 289; C.I. Reactive Red 21, C.I. Reactive Red 22, C.I. Reactive Red 23, C.I. Reactive Red 35, C.I. Reactive Red 63, C.I. Reactive Red 106, C.I. Reactive Red 107, C.I. Reactive Red 112, C.I. Reactive Red 113, C.I. Reactive Red 114, C.I. Reactive Red 126, C.I. Reactive Red 127, C.I. Reactive Red 128, C.I. Reactive Red 129, C.I. Reactive Red 130, C.I. Reactive Red 131, C.I. Reactive Red 137, C.I. Reactive Red 160, C.I. Reactive Red 161, C.I. Reactive Red 174 et C.I. Reactive Red 180; C.I. Pigment Red 122, C.I. Pigment Red 176, C.I. Pigment Red 184, C.I. Pigment Red 185 et C.I. Pigment Red 269 ; C.I. Direct Blue 199; C.I. Acid Blue 9 et C.I. Pigment Blue 15:1-15:4 en une quantité de 0,001 à 5 % en poids, en particulier de 0,01 bis 1 % en poids, par rapport au poids sec du colorant total.
